# EUROPÄISCHE PATENTSCHRIFT

(11) **EP 1 878 641 B1**
(45) Veröffentlichungstag und Bekanntmachung des Hinweises auf die Patenterteilung: **12.10.2011**
(21) Anmeldenummer: 07013169.3
(22) Anmeldetag: 05.07.2007
(51) Int. Cl.: B62D 25/08, B62D 27/06

(54) **Windleiteinrichtung**
Air-guiding device
Dispositif de guidage de l'air

(30) Priorität: 14.07.2006 DE 102006032809
(43) Veröffentlichungstag der Anmeldung: 16.01.2008
(73) Patentinhaber: Dr. Ing. h.c. F. Porsche AG, 70435 Stuttgart (DE)
(72) Erfinder: Nabert, Bernd, 72296 Schopfloch (DE)

(56) Entgegenhaltungen:
- EP-A- 0 099 115
- US-A- 4 521 050
- US-A- 5 667 271

## Beschreibung

Die vorliegende Erfindung betrifft eine im Bereich einer Windschutzscheibe eines Kraftfahrzeugs angeordnete Windleiteinrichtung.

Aus der DE 28 35 802 A1 ist eine an einer dünnen Fahrzeugwand anliegende, der Versteifung dienende, Schiene bekannt, deren Mittelteil durch eine zu den Enden hin auslaufende Profilierung eine höhere Festigkeit aufweist als deren Enden. Um im Fahrbetrieb des Kraftfahrzeuges ein Flattern der Fahrzeugwand zu verhindern, sind die Enden der Schiene jeweils zu einem eine unrunde Form aufweisenden Auge geformt, auf das ein mit Vorspannung an einem festen Fahrzeugteil sich abstützender Schenkel aus federndem Material aufgeschoben wird. Hierdurch wird eine scharnierartige Verbindung zwischen der Schiene und dem sich endseitig abstützenden Schenkel geschaffen, wobei das Auge einen Scharnierzapfen bildet.

Aus der DE 1 405 875 ist ebenfalls eine Vorrichtung zum Versteifen dünner Wände von Fahrzeugen bekannt, mit einer aus einem federnden Werkstoff bestehenden, am zu versteifenden Teil anliegenden Schiene, die zumindest mit einer Längssicke versehen ist und deren Mittelteil eine härtere Federcharakteristik aufweist als ihre an festen Fahrzeugteilen angebrachten Enden. Um eine Aussteifung der dünnen Wand in der Art zu erreichen, dass weder ein Flattern der dünnen Wand noch ein Eindrücken in die Wand eintritt, weist die aus Federbandstahl hergestellte Schiene mindestens eine ununterbrochene, an ihren Enden flacher werdende Sicke sowie federnde Endabschnitte mit rechteckigem Querschnitt auf, die in Schlitze der festen Fahrzeugteile unter Vorspannung der Endabschnitte eingesteckt sind.

Die EP-A-0 099 115 offenbart eine im Bereich einer Windschutzscheibe angeordnete Windleiteinrichtung, wobei seitliche Längsendbereiche der Windleiteinrichtung durch eine formschlüssige Steckverbindung mit der Karosserie verbunden sind. In Fahrzeugquerrichtung verlaufende Laschen der Windleiteinrichtung sind in korrespondierende Aufnahmen der Karosserie eingesteckt und fixieren die Windleiteinrichtung in Fahrzeughöhenrichtung. In Fahrzeuglängsrichtung ist die Windleiteinrichtung über Niet- und Steckverbindungen zusätzlich mit der darunterliegenden Karosserie verbunden.

Aus der US-A-5,667,271 ist es bekannt, seitliche Längsendbereiche einer im Bereich einer Windschutzscheibe angeordneten Windleiteinrichtung über eine lösbare Schnappverbindung mit dem darunterliegenden Aufbau zu verbinden. Hierzu hintergreifen angeformte Rasthaken der Windleiteinrichtung Randbereiche von Aussparungen des Aufbaus. Aufgesteckte Befestigungsclipse mit nach oben ragenden federnden Bereichen drücken von unten gegen einen vertikalen Wandabschnitt der Windleiteinrichtung. Aus der US-A-4,521,050 ist es bekannt, eine Windleiteinrichtung gemäß dem Oberbegriff vom Anspruch 1 Insbesondere bei leichten Verkleidungsteilen, wie beispielsweise einer Windleiteinrichtung, welche ebenfalls zum Bereich von dünnen Wänden/Bauteilen an Fahrzeugen zählt, kann es durch eine entsprechende Temperatureinwirkung zu einem Abheben von seitlichen Endbereichen kommen, was zum einen unschöne Spaltmaße erzeugen und zum anderen die Windleiteigenschaften der Windleiteinrichtung ungünstig beeinflussen kann.

Die vorliegende Erfindung beschäftigt sich mit dem Problem, für eine Windleiteinrichtung der eingangs erwähnten Art eine verbesserte Ausführungsform anzugeben, welche sich insbesondere dadurch auszeichnet, dass ein Abheben ihrer seitlichen Endbereiche unter Temperatureinwirkungen verhindert wird.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer im Bereich einer Windschutzscheibe eines Kraftfahrzeugs angeordneten Windleiteinrichtung eine Vorspanneinrichtung vorzusehen, welche die seitlichen Endbereiche der Windleiteinrichtung derart gegen das Kraftfahrzeug, insbesondere gegen die Windschutzscheibe vorspannt, dass diese sich aufgrund einer Temperaturbelastung nicht von der Windschutzscheibe ablösen können. Die Vorspanneinrichtung bewirkt demnach ein ständiges Vorspannen der seitlichen Endbereiche gegen die Windschutzscheibe bzw. gegen die Karosserie, so dass die von der Windleiteinrichtung bei der Montage eingenommene Position unabhängig von den normalerweise auftretenden Temperaturen erhalten bleibt. Die Erfindung gewährleistet somit, dass sich die Windleiteinrichtung auch im Sommer, beispielsweise bei sehr hohen Temperaturen, nicht von der Windschutzscheibe löst und dadurch einen unästhetischen Eindruck erweckt bzw. die aerodynamischen Eigenschaften der Windlaufeinrichtung verschlechtert.

Bei einer vorteilhaften Ausführungsform der erfindungsgemäßen Lösung ist zumindest ein Federelement der Vorspanneinrichtung als Federstahlteil ausgebildet bzw. aus Federstahl hergestellt. Ein derartiges aus Federstahl hergestelltes Federelement bewirkt eine gleichmäßige und über lange Zeit gleichbleibende Vorspannkraft, welche sich auch bei großen Temperaturunterschieden, wie sie beispielsweise zwischen Sommer und Winter auftreten können, nur unwesentlich ändert. Darüber hinaus bietet ein aus Federstahl hergestelltes Federelement den Vorteil, dass der Federstahl im Vergleich zu anderen Stählen stark federnde Eigenschaften besitzt dadurch deutlich stärkere elastische Verformungen aufzunehmen vermag.

Zweckmäßig greift das Federelement mit seinem der Karosserie abgewandten Ende in einen an der Windleiteinrichtung ausgebildeten Eingriff ein. Dies erleichtert eine Montage der mit der erfindungsgemäßen Vorspanneinrichtung ausgestatteten Windleiteinrichtung, da das zumindest eine Federelement der Windleiteinrichtung lediglich einenends mit dem Kraftfahrzeug fest verbunden werden muss und anderenends eine einfache Steckverbindung vorhanden ist. Im Vergleich zu einer festen Kopplung des der Karosserie abgewandten Endes des Federelements weist die Lösung, dieses Ende in eine an der Windlaufeinrichtung ausgebildete Tasche bzw. einen Eingriff einzustecken, den großen Vorteil, dass hier gewisse Verschiebemöglichkeiten zwischen Federelement und Windleiteinrichtung, bzw. zwischen Federelement und einem Verkleidungsprofil der Windleiteinrichtung möglich sind, wodurch beispielsweise aufgrund von Temperaturschwankungen auftretende Spannungen vermieden werden können.

Bei einer vorteilhaften Ausführungsform der erfindungsgemäßen Lösung weist ein im montierten Zustand sichtbares Verkleidungsprofil der Windleiteinrichtung zumindest einen vertieften Befestigungsbereich auf, an dem das Verkleidungsprofil fest mit der Karosserie verbunden ist und über welchen zusätzlich das Federelement an der Karosserie festgelegt ist. Dadurch können sowohl das Verkleidungsprofil als auch das Federelement mit ein und demselben Fixiermittel an der Karoserie am Fahrzeug festgelegt werden, wodurch sich zum einen der Montageaufwand verringert und zum anderen eine Reduzierung der Teilevielfalt erreicht werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht auf eine erfindungsgemäße Windleiteinrichtung,
- Fig. 2: eine stark schematisierte Schnittdarstellung entland der Linie A-A durch die Windleiteinrichtung.

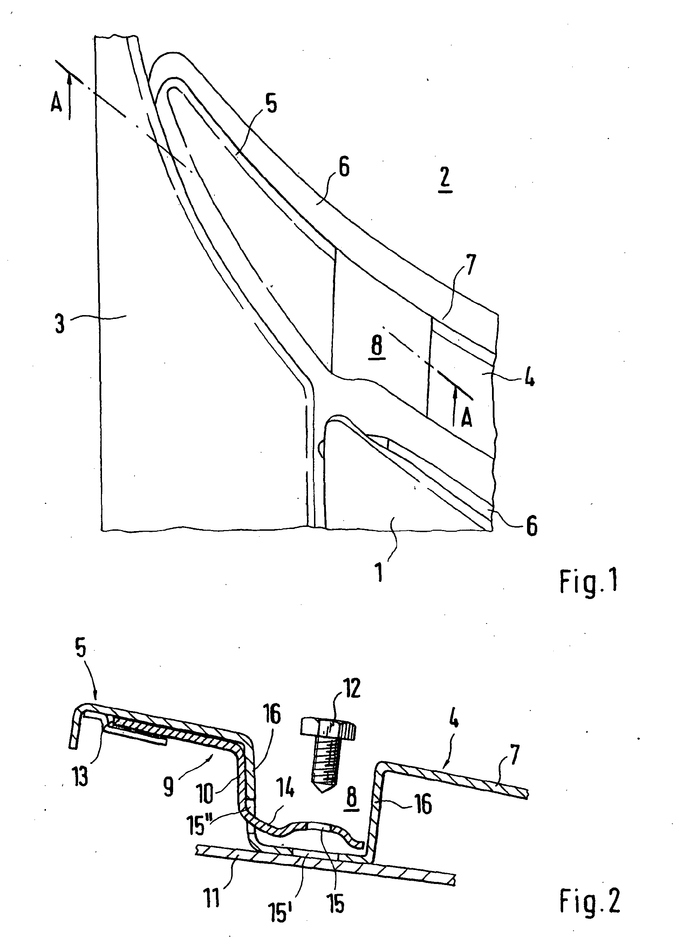

Entsprechend Fig. 1 ist ausschnittsweise ein seitlicher Bereich eines Übergangs von einer Motorhaube 1 in eine Windschutzscheibe 2 eines im übrigen nicht dargestellten Kraftfahrzeugs gezeigt, wobei sich in Fahrzeugquerrichtung seitlich an die Motorhaube 1 ein Kotflügel 3 des Kraftfahrzeugs anschließt. Im Bereich eines Überganges von der Motorhaube 1 bzw. dem Kotflügel 3 zur Windschutzscheibe 2 ist eine Windleiteinrichtung 4 angeordnet, welche einen aerodynamisch günstigen Übergang zwischen vorgenannten Bauteilen 1 und 3 und der Windschutzscheibe 2 bewirken soll. Die Windleiteinrichtung 4 verläuft dabei im wesentlichen in Fahrzeugquerrichtung und an einem unteren Rand der Windschutzscheibe 2 und weist im Bereich eines Übergangs zwischen der Motorhaube 1 und dem Kotflügel 3 einen seitlichen Endbereich 5 auf, welcher sich entlang einer Verbindungslinie zwischen Windschutzscheibe 2 und Kotflügel 3 erstreckt. Wie ebenfalls in Fig. 1 gezeigt ist, weist die Windleiteinrichtung 4 im wesentlichen umlaufende Flansche 6 auf, welche an der Windschutzscheibe 2 anliegen und im Bereich des Kotflügels 3 bzw. der Motorhaube 1 unter diesen angeordnet sind, wodurch eine aerodynamisch besonders gut ausgebildete Übergangszone geschaffen wird.

Der in Fig. 1 gezeigte Teil der Windleiteinrichtung 4 ist dabei ein Verkleidungsprofil 7, welches zumindest einen vertieften Befestigungsbereich 8 aufweist, an welchem es mit der Karosserie 11 des Kraftfahrzeugs verbunden ist. Dieser vertiefte Befestigungsbereich 8 ist auch in Fig. 2 dargestellt. Üblicherweise wird die Windleiteinrichtung 4 über zwei vertiefte Befestigungsbereiche 8 mit der Karosserie 11 verbunden, wobei gemäß den Fig. 1 und 2 lediglich ein Befestigungsbereich 8 gezeigt ist.

Insbesondere im Sommer, d.h. bei hohen Temperaturen, kann es vorkommen, dass sich die seitlichen Endbereiche 5 aufgrund der Temperaturverformungen von der Windschutzscheibe 2 abheben und dadurch unästhetische Spalte zwischen dem Verkleidungsprofil 7 und der Windschutzscheibe 2 erzeugt werden. Gleichzeitig ist mit einem Abheben der seitlichen Endbereiche 5 des Verkleidungsprofils 7 eine Verschlechterung der aerodynamischen Eigenschaften verbunden, so dass ein derartiges Abheben unbedingt vermieden werden muss. Um das beschriebene Abheben der seitlichen Endbereiche 5 zu vermeiden, weist die Windleiteinrichtung 4 eine Vorspanneinrichtung 9 auf, welche den jeweiligen Längsendbereich 5 der Windleiteinrichtung 4 bzw. des Verkleidungsprofils 7 in der Richtung der Windschutzscheibe 2 bzw. in Richtung auf das Fahrzeug vorspannt (Fig. 2).

Die Vorspanneinrichtung 9 umfasst dabei gemäß Fig. 2 zumindest ein Federelement 10, wobei normalerweise zwei Federelemente 10 zum jeweiligen Vorspannen des zugehörigen Endbereichs 5 vorgesehen sind. Eine Vorspannkraft des Federelements 10 wird dadurch erreicht, dass es vorzugsweise als Federstahlteil ausgebildet bzw. aus Federstahl hergestellt ist. Derartiger Federstahl weist eine im Vergleich zu herkömmlichen Stahl höherer Elastizität auf und kann dadurch größere elastische Verformungen aufnehmen. Generell sind hierbei aber auch andere Materialien, welche eine hohe Elastizität und eine entsprechende Vorspannkraft ausüben können einsetzbar. Darüber hinaus sollten die federnden Eigenschaften auch über ein relativ großes Temperaturfenster unverändert erhalten bleiben, so dass das Federelement 10 den Endbereich 5 des Verkleidungsprofils 7 sowohl im Winter bei niedrigen als auch im Sommer bei sehr hohen Temperaturen zuverlässig gegenüber der Windschutzscheibe 2 bzw. gegenüber der Karosserie vorspannt.

Wie in Fig. 2 dargestellt, ist das Federelement 10 einenends mit der Karosserie 11 des Kraftfahrzeugs und anderenends mit der Windleiteinrichtung 4 bzw. dem Verkleidungsprofil 7 derselben verbunden. Die Verbindung mit der Karosserie 11 erfolgt dabei über ein Fixiermittel 12, beispielsweise eine Schraube, wogegen eine Verbindung zwischen dem Federelement 10 und dem Verkleidungsprofil 7 der Windleiteinrichtung 4 über einen Eingriff 13 erfolgt, in welchen das Federelement 10 mit seinem, der Karosserie 11 abgewandten Ende eingreift und welcher von außen nicht sichtbar am Verkleidungsprofil 7 der Windleiteinrichtung 4 angeordnet ist.

Das Federelement 10 ist wie das Verkleidungsprofil 7 der Windleiteinrichtung 4 in dem Befestigungsbereich 8 mit der Karosserie 11 verbunden, wobei zur Verbindung der beiden Bauteile 7 und 10 mit der Karosserie 11 ein gemeinsames Fixiermittel 12 verwendet wird. Dabei ist ein Schenkel 14 des Z-förmig ausgebildeten Federelements 10 mit einer Durchgangsöffnung 15 versehen, welche mit einer im vertieften Befestigungsbereich 8 des Verkleidungsprofils 7 angeordneten Durchgangsöffnung 15' fluchtet und dadurch gemeinsame Verbindung des Federelements 10 und des Verkleidungsprofils 7 mit der Karosserie 11 ermöglicht. Im Bereich der Durchgangsöffnung 15 des Schenkels 14 ist dieser gewölbt und zwar von der Karosserie 11 weg gewölbt ausgebildet, wodurch sich eine auf das Fixiermittel 12 wirkende Vorspannung beim Festziehen desselben ergibt, so dass sich das Fixiermittel 12 im montierten Zustand nicht selbstständig lösen kann.

Eine Seitenwand 16 des vertieften Befestigungsbereiches 8 weist wie in Fig. 2 dargestellt eine weitere Durchgangsöffnung 15" auf, welche von dem Schenkel 14 des Federelements 10 durchgriffen wird. Diese Durchgangsöffnung 15" ermöglicht es, dass das Federelement 10 lediglich im Bereich des vertieften Befestigungsbereiches 8 von außen sichtbar ist, wogegen es ansonsten nicht sichtbar innerhalb des Verkleidungsprofils 7 verläuft.

Zusammenfassend lassen sich die wesentlichen Merkmale der erfindungsgemäßen Lösung wie folgt charakterisieren:
Um ein Abheben von seitlichen Endbereichen 5 eines zu einer Windleiteinrichtung 4 gehörenden Verkleidungsprofils 7 auch bei ungewöhnlichen Temperaturbelastungen wirkungsvoll verhindern zu können, schlägt die Erfindung eine Vorspanneinrichtung 9 vor, welche vorzugsweise aus Federstahl ausgebildete Federelemente 10 aufweist, die eben jene seitlichen Endbereiche 5 gegen eine Windschutzscheibe 2 bzw. gegen eine Karosserie 11 vorspannen und dadurch ein Abheben derselben unterbinden.

## Patentansprüche

1. Windleiteinrichtung (4) angeordnet im Bereich einer Windschutzscheibe (2) eines Kraftfahrzeuges insbesondere ein in Fahrzeugquerrichtung angeordneter Windlauf, mit einer Vorspanneinrichtung (9), welche Längsendbereiche (5) der Windleiteinrichtung (4) in Richtung auf das Fahrzeug vorspannt, wobei die Vorspanneinrichtung (9) durch zumindest ein Z-förmig ausgebildetes Federelement (10) gebildet wird, dessen eines Ende in einen an der Windleiteinrichtung (4) ausgebildeten Eingriff (13) eingesteckt ist und **dadurch gekennzeichnet, dass** das andere Ende vom Federalement (10) in einem vertieften Befestigungsbereich (8) eines sichtbaren Verkleidungsprofils (7) der Windleiteinrichtung (4) zusammen mit der Windleiteinrichtung (4) über ein gemeinsames Fixiermittel (12) an der Karosserie (11) festgelegt ist.

2. Windleiteinrichtung nach Anspruch 1, **dadurch gekennzeichnet, dass** das zumindest eine Federelement (10) aus Federstahl ausgebildet ist.

3. Windleiteinrichtung nach Anspruch 1, **dadurch gekennzeichnet, dass** das Federelement (10) als rechtwinkliges Z-Profil ausgebildet ist.

4. Windleiteinrichtung nach Anspruch 1, **dadurch gekennzeichnet, dass** eine Seitenwand (16) des vertieften Befestigungsbereichs (8) eine Durchgangsöffnung (8") aufweist, durch welche das Federelement (10) in montiertem Zustand hindurchgreift.

## Claims

1. Wind-deflecting device (4) arranged in the region of a windshield (2) of a motor vehicle, in particular a cowl arranged in the transverse direction of the vehicle, with a prestressing device (9) which prestresses longitudinal end regions (5) of the wind-deflecting device (4) in the direction of the vehicle, wherein the prestressing device (9) is formed by at least one spring element (10) which is of Z-shaped design and one end of which is inserted into an engagement means (13) formed on the wind-deflecting device (4), **characterized in that** the other end of the spring element (10) is fixed in a recessed fastening region (8) of a visible covering profile (7) of the wind-deflecting device (4) together with the wind-deflecting device (4) to the bodywork (11) via a common fixing means (12).

2. Wind-deflecting device according to Claim 1, **characterized in that** the at least one spring element (10) is formed from spring steel.

3. Wind-deflecting device according to Claim 1, **characterized in that** the spring element (10) is designed as a right angled Z profile.

4. Wind-deflecting device according to Claim 1, **characterized in that** a side wall (16) of the recessed fastening region (8) has a passage opening (8") through which the spring element (10) reaches in the fitted state.

## Revendications

1. Dispositif de guidage d'air (4) disposé dans la région d'un pare-brise (2) d'un véhicule automobile, en particulier auvent disposé dans la direction transversale du véhicule, comprenant un dispositif de précontrainte (9), qui précontraint des régions d'extrémité longitudinales (5) du dispositif de guidage d'air (4) dans la direction du véhicule, le de précontrainte (9) étant formé par au moins un élément de ressort (10) réalisé en forme de dont une extrémité est enfichée dans une partie de prise (13) réalisée sur le dispositif de guidage d'air (4) et **caractérisé en ce que** l'autre extrémité de l'élément de ressort (10) est fixée à la carrosserie (11) par le biais d'un moyen de fixation commun (12) dans une région de fixation (8) renfoncée d'un profile d'habillage visible (7) du dispositif de guidage d'air (4), conjointement avec le dispositif de guidage d'air (4).

2. Dispositif de guidage d'air selon la revendication 1, **caractérisé en ce que** l'au moins un élément de ressort (10) est réalisé en acier à ressort.

3. Dispositif de guidage d'air selon la revendication 1, **caractérisé en ce que** l'élément de ressort (10) est réalisé sous forme de profilé en Z rectangulaire.

4. Dispositif de guidage d'air selon la revendication 1, **caractérisé en ce qu'**une paroi latérale (16) de la région de fixation renfoncée (8) présente une ouverture traversante (8") à travers laquelle s'engage l'élément de ressort (10) dans l'état monté.
